# EUROPÄISCHE PATENTANMELDUNG

(11) **EP 2 071 937 A2**
(43) Veröffentlichungstag der Anmeldung: **24.06.2009**
(21) Anmeldenummer: 08020945.5
(22) Anmeldetag: 03.12.2008
(51) Int. Cl.: A01G 9/02

(54) **Pflanztopf**

(30) Priorität: 18.12.2007 DE 202007017780 U
(71) Anmelder: Schäfler, Jürgen, 88085 Langenargen (DE)
(72) Erfinder: Schäfler, Jürgen, 88085 Langenargen (DE)
(74) Vertreter: Engelhardt, Volker

(57) **Zusammenfassung**

Bei einem Pflanztopf (1, insbesondere zur Aufnahme von Orchideen oder ähnlichen Gewächsen (2), soll der Pflanztopf (1) insbesondere für Orchideen optimale Wachstumsbedingungen ermöglichen. Vor allem sollen die Wurzeln (3) der Pflanze (2) wachsen können, ohne dass diese vertrocknen oder durch zu hohe Feuchtigkeit in Mitleidenschaft gezogen werden. Der Bauaufwand, mittels dem dies zu erreichen ist, soll gering gehalten werden, dennoch soll der Pflanztopf (1) bei artgerechter Haltung der Pflanze (2) vielseitig zu gestalten und somit auch vielseitig verwendbar sein.

Dies wird dadurch erreicht, dass der Pflanztopf (1,1',1 ",1''') aus einem Topfeinsatz (11,11',11",11''') und einer diesen aufnehmenden Topfummantelung (21,21',21",21''') besteht, dass der Topfeinsatz (11,11',11",11''') mit einer Vielzahl von Durchbrechungen (14,16,18) für die Wurzeln (3) des Gewächses (2) versehen ist und dass zwischen dem Topfeinsatz (11,11',11",11''') und der Topfummantelung (21,21',21",21''') ein Freiraum (30,30',30") zur Aufnahme der Wurzeln (3) des Gewächses (2) gebildet ist.

## Beschreibung

Die Erfindung bezieht sich auf einen insbesondere zur Aufnahme von Orchideen oder ähnlichen Gewächsen verwendbaren Pflanztopf.

Pflanztöpfe für Gewächse sind in zahlreichen unterschiedlichen Ausgestaltungen bekannt. Die Wandungen dieser Gefäße sind jeweils geschlossen ausgebildet, lediglich im Boden, der oftmals vom Untergrund, auf den der Pflanztopf abgestellt ist, mit Hilfe von angeformten Füßen mit Abstand angeordnet ist, sind Öffnungen eingearbeitet. Durch diese Durchbrechungen kann überschüssiges Wasser, das beim Gießen in den Pflanztopf eingebracht wurde, abfließen, auch können die Wurzeln der Pflanze durch diese hindurchwachsen.

Dient ein derartiger Pflanztopf zur Aufnahme einer Orchidee, sterben deren Wurzeln in dem am Boden befindlichen Wasser ab, da dieser Bereich für die Pflanze zu nass ist. Und Wurzeln, die im oberen Bereich des Pflanztopfes aus dem in diesen eingefülltes Erdreich austreten, vertrocknen meist nach kurzer Zeit. Die bekannten Pflanztöpfe, die vielfach mit einem Übertopf verschönert werden, sind somit vor allem zur Haltung von Orchideen nicht geeignet.

Aufgabe der Erfindung ist es daher, einen Pflanztopf zu schaffen, der insbesondere für Orchideen optimale Wachstumsbedingungen ermöglicht. Vor allem sollen die Wurzeln der Pflanze wachsen können, ohne dass diese vertrocknen oder durch zu hohe Feuchtigkeit in Mitleidenschaft gezogen werden. Der Bauaufwand, mittels dem dies zu erreichen ist, soll gering gehalten werden, dennoch soll der Pflanztopf bei artgerechter Haltung der Pflanze vielseitig zu gestalten und somit auch vielseitig verwendbar sein.

Gemäß der Erfindung wird dies dadurch erreicht, dass der Pflanztopf aus einem Topfeinsatz und einer diesen aufnehmenden Topfummantelung besteht, dass der Topfeinsatz mit einer Vielzahl von Durchbrechungen für die Wurzeln des Gewächses versehen ist und dass zwischen dem Topfeinsatz und der Topfummantelung ein Freiraum zur Aufnahme der Wurzeln des Gewächses gebildet ist.

Die Topfummantelung kann als Teil einer Kugel, als Zylinderabschnitt oder als kubischer oder quaderförmiger Hohlkörper ausgebildet sein, auch sollte die Topfummantelung aus einem transparenten Werkstoff bestehen.

Der Topfeinsatz kann hierbei aus mit seitlichem Abstand zueinander angeordneten Stäben aus Holz, Ton, Metall, Glas oder Kunststoff, aus einem mit Löchern versehenen Blech, einem Drahtgeflecht oder einem Gitter aus Metall, Glas oder Kunststoff oder einem ähnlichen mit von dem Wurzeln zu durchwachsenden Durchbrechungen versehen Gebilde hergestellt werden.

Vorteilhaft ist es, wenn der zwischen dem Topfeinsatz und der Topfummantelung vorgesehene Freiraum im Volumen zumindest dem Volumen des Topfeinsatzes entspricht, wobei einem zylindrisch gestalteten Topfeinsatz und einer zylindrisch gestalteten Topfummantelung deren Durchmesser im Verhältnis etwa 1:2 bemessen sein sollten.

Angebracht ist es des Weiteren, den zwischen dem Topfeinsatz und der Topfummantelung vorgesehenen Freiraum im oberen Endbereich des Pflanztopfes nahezu vollständig abzudecken.

Bei einer als Kugelabschnitt ausgebildeten Topfummantelung kann dies dadurch bewerkstelligt werden, in dem deren oberer Randbereich bis nahe an den Topfeinsatz herangeführt wird, bei einer zylindrisch, quaderförmig oder kubisch ausgebildeten Topfummantelung kann der zwischen dieser und dem Topfeinsatz gebildete Freiraum durch einen ein- oder mehrteiligen auf die Topfummantelung aufsetzbaren und vorzugsweise mit dieser verrastbaren Deckel verschlossen werden.

Zweckmäßig ist es auch, den Topfeinsatz auf einer in die Topfummantelung eingesetzten Stützglied, einem Steck- oder Bewässerungsschwamm oder dgl. zu lagern. Auch sollte der Topfeinsatz lösbar in der Topfummantelung eingesetzt sein.

In einer Topfummantelung mit vorzugsweise rechteckiger Grundfläche können auch zwei oder mehrere Topfeinsätze mit seitlichem Abstand zueinander und zu der Wandung der Topfummantelung einsetzt sein.

Wird ein Pflanztopf gemäß der Erfindung ausgebildet, so ist mit hoher Sicherheit die Gewähr gegeben, dass sich die Wurzeln des in diesen eingepflanzten Gewächses über einen langen Zeitraum artgerecht entwickeln können, ohne dass die Gefahr besteht, dass die Wurzeln vertrocknen oder im nassen Erdreich absterben. Dadurch, dass die Wurzeln aus dem Topfeinsatz in nahezu jeder Höhenlage herauswachsen und in den nahezu geschlossenen Freiraum zwischen diesem und der Topfummantelung hineinwachsen können, sind die Wurzeln zuverlässig geschützt. Und da in dem Freiraum eine hohe Luftfeuchtigkeit herrscht, die das Wachstum der Pflanze, insbesondere der Wurzeln von Orchideen, begünstigt, ist stets ein erfreuliches Gedeihen der in dem Pflanztopf eingesetzten Pflanze gewährleistet.

Des Weiteren kann der vorschlagsgemäß ausgebildete Pflanztopf ohne Schwierigkeiten, da der Topfeinsatz und/oder die von diesem gehaltene Pflanze leicht zu entfernen sind, gereinigt werden. Auch sind der Topfensatz und die Topfummantelung attraktiv zu gestalten, wobei mitunter mehrere Topfeinsätze in einer zum Beispiel im Querschnitt rechteckigen Topfummantelung angeordnet werden können, so dass bei geringem Materialaufwand eine vielseitige Verwendbarkeit und vielfältige Gestaltungsmöglichkeiten gegeben sind.

In der Zeichnung sind einige Ausführungsbeispiele des gemäß der Erfindung ausgebildeten Pflanztopfes dargestellt, die nachfolgend im einzelnen erläutert sind. Hierbei zeigt, jeweils in perspektivischen Darstellungen,
- Figur 1: einen Pflanztopf mit einem aus Stäben bestehenden Topfeinsatz und einer kugelförmig gestalteten Topfummantelung,
- Figur 2: einen Pflanztopf mit einer durch ein gelochtes Blech gebildeten Topfeinsatz und einer zylindrischen Topfummantelung,
- Figur 3: einen Pflanztopf mit einem Drahtgitter als Topfeinsatz und einem quaderförmigen Hohlkörper als Topfummantelung,
- Figur 4: mehrere in einer kastenförmigen Topfummantelung eingesetzte quaderförmige Topfeinsätze und
- Figur 5: den Topfeinsatz gemäß Figur 1, an dem ein Teller angeformt ist.

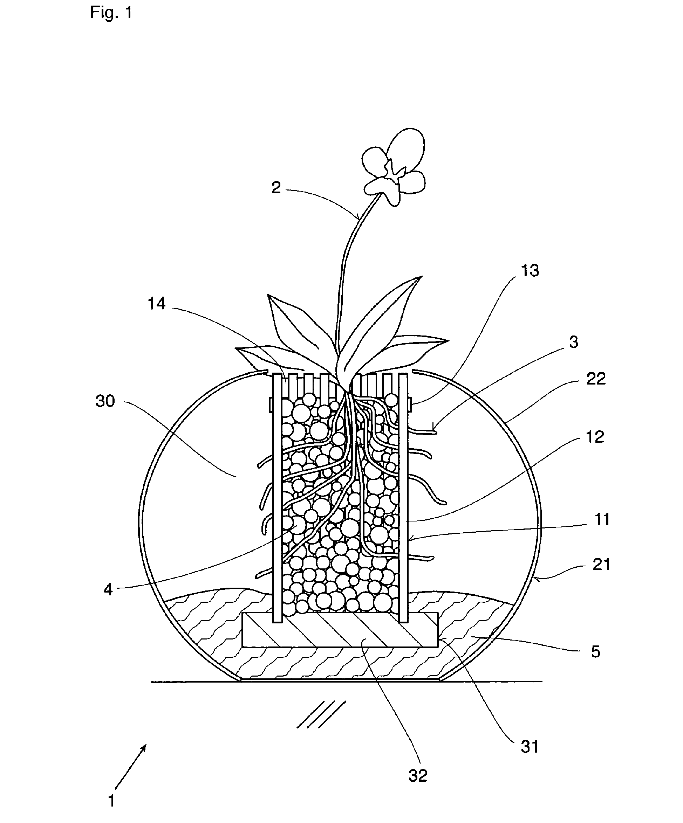

Der in Figur 1 dargestellte und mit 1 bezeichnete Pflanztopf dient zur Aufnahme einer Pflanze 2, beispielsweise einer Orchidee, und besteht im wesentlichen aus einem Topfeinsatz 11 und einer diesen aufnehmenden kugelartig gestalteten Topfummantelung 21. Der Topfeinsatz 11 ist hierbei durch mit seitlichem Abstand zueinander angeordnete Stäbe 12, die aus unterschiedlichen Materialien, zum Beispiel Ton, Holz, Keramik, Kunststoff, Glas oder einem ähnlichen Werkstoff bestehen können und im oberen Bereich durch ein Band 13 zusammengehalten werden, gebildet. Die Stäbe 12 sind in einem Stützglied 31, das ein Steckschwamm 32 sein kann, gehalten.

Die Topfummantelung 21 ist aus einem transparenten Werkstoff hergestellt, so dass sichtbar ist, in welcher Weise die Wurzeln 3 der Pflanze 2 aus dem Erdreich 4, das in dem Topfeinsatz 11 eingefüllt ist, durch die Zwischenräume 14 zwischen den einzelnen Stäben 12 in einen Freiraum 30 hineinwachsen. Durch die als Glaskugel 22 gestaltete Topfummantelung 21 und das zylinderartige Einsatzstück 11 ergibt sich der Freiraum 30 zwangsläufig. Außerdem ist dieser im oberen Bereich nahezu verschlossen, in dem die Glaskugel 22 dicht an den Topfeinsatz 11 herangeführt ist. In dem Freiraum 30 herrscht somit, da auch das in der Ummantelung 21 befindliche Erdreich 4 Feuchtigkeit abgibt, eine hohe Luftfeuchtigkeit, durch die das Wachstum der Pflanze 2 begünstigt wird.

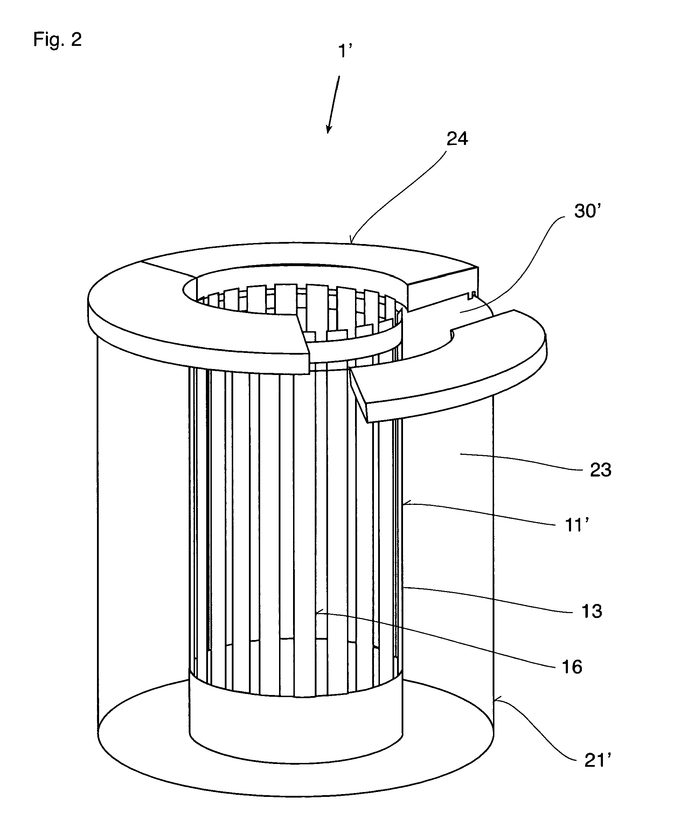

Bei dem Pflanztopf 1' nach Figur 2 ist der Topfeinsatz 11' durch ein mit Ausnehmungen 16 versehenes gewickeltes Blech 15 gebildet und unmittelbar in die Ummantelung 21' eingesetzt, die als Zylinder 23 gestaltet ist. Die Durchmesser des Bleches 16 und des Zylinders 23 verhalten sich hierbei etwa wie 1:2, so dass ebenfalls ein schlitzartiger Freiraum 30' für die Wurzeln einer in den Topfeinsatz 11' einzusetzenden Pflanze 2 geschaffen ist. Durch einen unterteilten Deckel 24 ist der Freiraum 30' nahezu dicht verschlossen, dieser ist aber durch Abnahme des Deckels 24 leicht zugänglich und somit leicht zu reinigen.

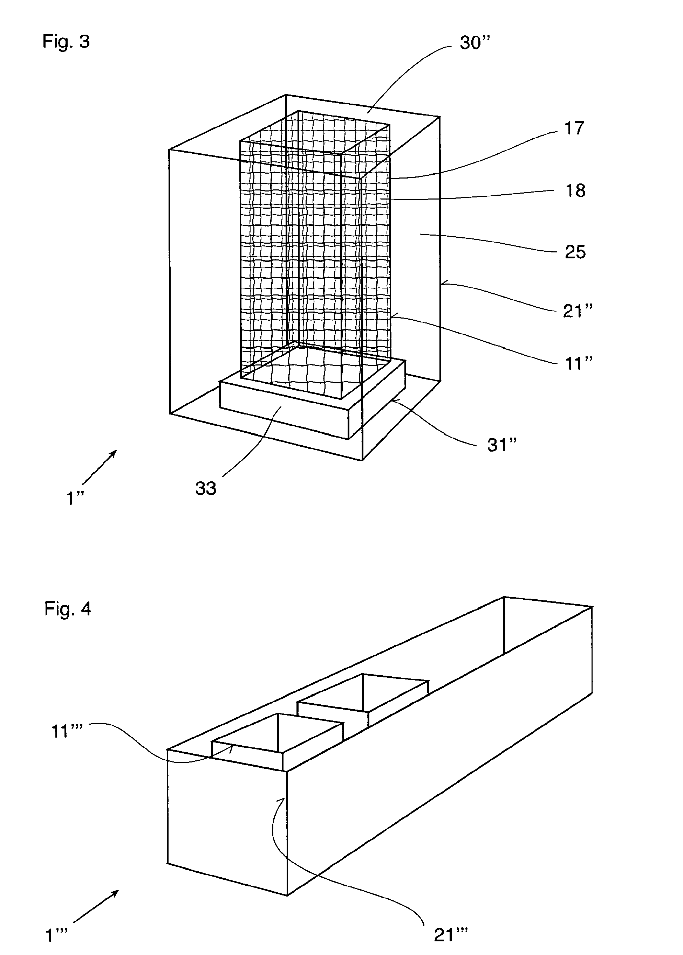

Der in Figur 3 dargestellte Pflanztopf 1'' besteht aus einem aus einem Drahtgewebe 17 hergestellten quaderförmig gestalteten Topfeinsatz 11" und einer ebenfalls quaderförmig ausgebildeten behälterartigen Topfummantelung 25. Die Wurzeln 3 können durch die Löcher 18 des Drahtgewebes 17, das in einem Rahmen 33 gehalten ist, ebenfalls in einen Freiraum 30" zwischen den Topfeinsatz 11" und der Topfummantelung 21" hineinwachsen.

In Figur 4 ist gezeigt, dass ein Pflanztopf 1''' auch aus einer kastenförmigen Topfummantelung 21''' bestehen kann, in die mehrere Topfeinsätze 11''' mit seitlichem Abstand zueinander und zu der Wandung der Topfummantelung 21''' angeordnet werden können. Auf diese Weise kann zum Beispiel ein Blumenfenster korrekt gestaltet werden.

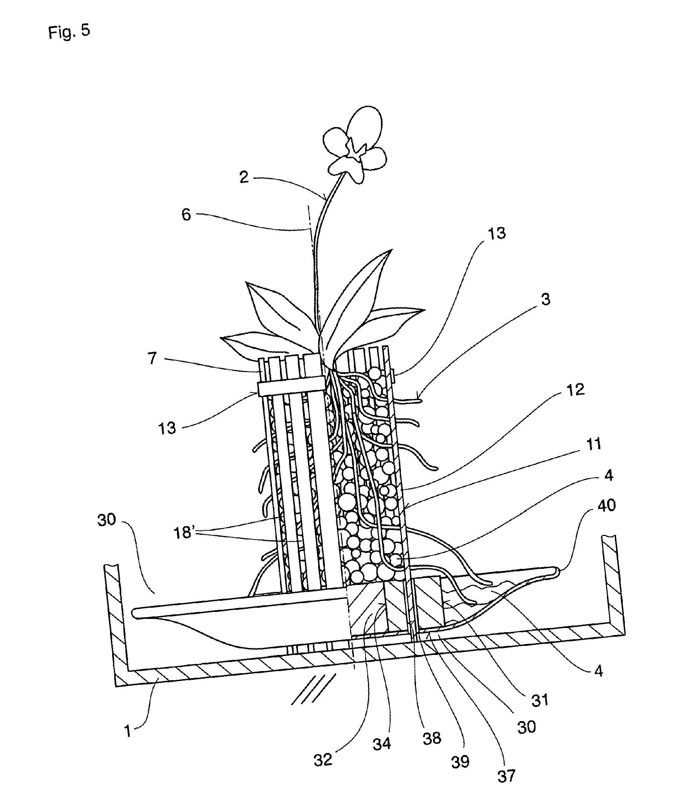

Der in Figur 5 abgebildete Topfeinsatz 11 besteht aus dem platten- oder kastenförmigen Stützglied 31 an dem die Stäbe 12 angeformt sind.

In das Stützglied 31 können auch Durchgangsbohrungen 38 zur Aufnahme und Halterung der Stäbe 12 eingearbeitet sein. Die Stäbe 12 ragen teilweise aus dem Stützglied 31 aus und bilden gemeinsam eine Auflageebene 39, durch die das Stützglied 31 von der Oberfläche des Pflanztopfes 1 beabstandet ist und folglich zwischen diesen beiden Bauteilen der Freiraum 30 entsteht. In das Stützglied 31 ist eine runde- oder rechtseckförmige Ausnehmung eingearbeitet, so dass das Stützglied 31 einen Hohlraum 34 umschließt. In den Hohlraum 34 kann zur Bildung eines Bodens 37 der Schwamm 32 eingesetzt sein, so dass der Schwamm 32 aus dem Hohlraum 34 der Platte 31 im Bedarfsfalle herausgezogen werden kann.

Zwischen den parallel zu der Längsrichtung 6 des Topfeinsatzes 11 ausgerichteten Stäbe 12 ist jeweils einer der Freiräume 30 vorgesehen, zwischen denen die Wurzeln 3 der Pflanze 2 herauswachsen können. Das im Bereich der freien Enden der Stäbe 12 angebrachte Band 13, durch das die Stäbe 12 miteinander fixiert werden, ist abnehmbar, so dass die Pflanze 2 zusammen mit den Wurzeln 3 aus den Freiräumen 30 und somit aus dem Topfeinsatz 11 herausgezogen werden kann, ohne dass die Pflanze 2 oder deren Wurzeln 3 dadurch beschädigt werden bzw. ohne dass in horizontaler Ebene verlaufende Drahtgeflechte diese Bewegung behindern und aufzutrennen sind.

Des Weiteren ist an das Stützglied 31 ein Teller 40 angeformt, dessen äußere Umfangskante in Richtung der freien Enden der Stäbe 12 gebogen ist, so dass in dem Teller 40 Erde 4 eingefüllt werden kann. In den Teller 40 sind Entlüftungsöffnungen eingearbeitet, um die Feuchtigkeit aus dem Erdreich 4 in den darunter angeordneten Freiraum 30 abfließen zu lassen.

## Patentansprüche

1. Pflanztopf (1,1',1",1''') insbesondere zur Aufnahme von Orchideen oder ähnlichen Gewächsen (2),
**dadurch gekennzeichnet,**
**dass** der Pflanztopf (1,1',1'',1''') aus einem Topfeinsatz (11,11',11'',11''') und einer diesen aufnehmenden Topfummantelung (21,21',21'',21''') besteht, dass der Topfeinsatz (11,11',11'',11''') mit einer Vielzahl von Durchbrechungen (14,16,18) für die Wurzeln (3) des Gewächses (2) versehen ist und dass zwischen dem Topfeinsatz (11,11',11'',11''') und der Topfummantelung (21,21',21'',21''') ein Freiraum (30,30',30'') zur Aufnahme der Wurzeln (3) des Gewächses (2) gebildet ist.

2. Pflanztopf nach Anspruch 1,
**dadurch gekennzeichnet,**
**dass** die Topfummantelung (21,21',21'',21''') als Teil einer Kugel (22), als Zylinderabschnitt (23) oder als quaderförmiger oder kubischer Hohlkörper (25) ausgebildet ist.

3. Pflanztopf nach Anspruch 1 oder 2,
**dadurch gekennzeichnet,**
**dass** die Topfummantelung (21,21',21'',21''') aus einem transparenten Werkstoff besteht.

4. Pflanztopf nach einem der Ansprüche 1 bis 3,
**dadurch gekennzeichnet,**
**dass** der Topfeinsatz (11,11',11'') aus mit seitlichem Abstand zueinander angeordneten Stäben (12) aus Holz, Ton, Metall, Glas oder Kunststoff, aus einem mit Löchern (16) versehenen Blech (15), einem Drahtgeflecht (17) oder einem Gitter aus Metal, Glas oder Kunststoff oder einem ähnlichen mit von dem Wurzeln (3) zu durchwachsenden Durchbrechungen versehenen Gebilde besteht.

5. Pflanztopf nach einem oder mehreren der Ansprüche 1 bis 4,
**dadurch gekennzeichnet,**
**dass** der zwischen dem Topfeinsatz (11,11')und der Topfummantelung (21,21') vorgesehene Freiraum (30,30') im Volumen zumindest dem Volumen des Topfeinsatzes (11,11') entspricht.

6. Pflanztopf nach Anspruch 5,
**dadurch gekennzeichnet,**
**dass** bei zylindrisch gestaltetem Topfeinsatz (11') und zylindrisch gestalteter Topfummantelung (21') deren Durchmesser im Verhältnis von etwa 1:2 bemessen sind.

7. Pflanztopf nach einem oder mehreren der Ansprüche 1 bis 6,
**dadurch gekennzeichnet,**
**dass** der zwischen dem Topfeinsatz (11) und der Topfummantelung (21) vorgesehene Freiraum (30,30") im oberen Endbereich des Pflanztopfes (1) nahezu vollständig abgedeckt ist.

8. Pflanztopf nach Anspruch 7,
**dadurch gekennzeichnet,**
**dass** bei einer als Kugelabschnitt (22) ausgebildeten Topfummantelung (21) deren oberer Randbereich bis nahe an den Topfeinsatz (11) herangeführt ist.

9. Pflanztopf nach Anspruch 7,
**dadurch gekennzeichnet,**
**dass** bei einer zylindrisch, quaderförmigen oder kubisch ausgebildeten Topfummantelung (21', 21 ") der zwischen dieser und dem Topfeinsatz (11', 11") gebildete Freiraum (30', 30")) durch einen ein- oder mehrteiligen auf die Topfummantelung (21') aufsetzbaren und vorzugsweise mit dieser verrastbaren Deckel (24) verschliessbar ist.

10. Pflanztopf nach einem oder mehreren der Ansprüche 1 bis 9,
**dadurch gekennzeichnet,**
**dass** der Topfeinsatz (11,1") auf einem in die Topfummantelung (21,21") eingesetzten Stützglied (31,31"), einem Steck- oder Bewässerungsschwamm (32) oder dergleichen gehalten ist.

11. Pflanztopf nach einem oder mehreren der Ansprüche 1 bis 10,
**dadurch gekennzeichnet,**
**dass** der Topfeinsatz (11,11',11",11''') lösbar in die Topfummantelung (21,21',21",21''') eingesetzt ist.

12. Pflanztopf nach einem oder mehreren der Ansprüche 1 bis 11,
**dadurch gekennzeichnet,**
**dass** in einer Topfummantelung (21''') mit vorzugsweise rechteckiger Grundfläche zwei oder mehrere Topfeinsätze (11''') mit seitlichem Abstand zueinander und zu der Wandung der Topfummantelung (21''') beabstandet sind.

13. Topfeinsatz (11), insbesondere zur Verwendung in einem Pflanztopf (1) nach einem der vorgenannten Ansprüche,
**dadurch gekennzeichnet,**
**dass** in die Wandung des Topfeinsatzes (11) eine oder mehrere Öffnungen (18') eingearbeitet sind, die schlitzartig ausgebildet sind und die parallel zu der Längsachse (6) des Topfeinsatzes (11) verlaufen und dass die jeweilige Öffnung (18') an einer der beiden Stirnseiten (7) des Topfeinsatzes (11) offen ausgebildet sind.

14. Topfeinsatz nach Anspruch 13,
**dadurch gekennzeichnet,**
**dass** der Topfeinsatz (11) aus einem Stützglied (31) besteht, in das ein Hohlraum (34) eingearbeitet ist und dass an dem Stützglied (31) eine Vielzahl von Stegen, Stäben (12) oder dgl. angeformt sind und/oder die in eine Vielzahl von in das Stützglied (31) eingearbeiteten Durchgangsbohrungen (38) eingesteckt sind, dass die Stäbe (12) parallel zu der Längsachse (6) des Topfeinsatzes (11) verlaufen, und dass zwischen zwei benachbarten Stäben (12) die schlitzartige Öffnung (18') gebildet ist.

15. Topfeinsatz nach Anspruch 13 oder 14,
**dadurch gekennzeichnet,**
**dass** das Stützglied (31) als Rohr ausgebildet ist, und dass der in dem Stützglied (31) eingearbeitete Hohlraum (34) rund, elliptisch oder mehreckig gestaltet ist.

16. Topfeinsatz nach einem der Ansprüche 13 bis 15,
**dadurch gekennzeichnet,**
**dass** in dem Hohlraum (34) des Stützgliedes (31) ein Schwamm (32) oder dgl. eingesetzt ist und dass der Schwamm (32) oder dgl. den Boden (37) des Topfeinsatzes (11) bildet.

17. Topfeinsatz nach einem der Ansprüche 13 bis 16,
**dadurch gekennzeichnet,**
**dass** an das Stützglied (31) ein nach außen abstehender Teller (40) angeformt ist, der als Halterfläche für die auf diesen aufliegenden Wurzeln (3) der in den Topfeinsatz (11) eingesteckten Pflanze (2) dient.
